(19) **Europäisches Patentamt**
European Patent Office
Office européen des brevets

(11) **EP 2 589 794 A2**

(12) **EUROPÄISCHE PATENTANMELDUNG**

(43) Veröffentlichungstag:
**08.05.2013 Patentblatt 2013/19**

(51) Int Cl.:
*F03B 17/02* $^{(2006.01)}$        *F03B 17/06* $^{(2006.01)}$

(21) Anmeldenummer: **12005791.4**

(22) Anmeldetag: **09.08.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **03.09.2011   DE 102011112483**

(71) Anmelder: **ROBERT BOSCH GMBH**
**70442 Stuttgart (DE)**

(72) Erfinder:
• **Hilsch, Michael**
**70192 Stuttgart (DE)**

• **Thull, Daniel**
**70599 Stuttgart (DE)**
• **Hagemann, Benjamin**
**70839 Gerlingen (DE)**
• **Scharmann, Nik**
**74321 Bietigheim-Bissingen (DE)**

(74) Vertreter: **Thürer, Andreas**
**c/o Bosch Rexroth AG**
**Zum Eisengiesser 1**
**97816 Lohr am Main (DE)**

(54)   **Ausrichtung eines Wellenenergiekonverters zur Umwandlung von Energie aus einer Wellenbewegung eines Fluids in eine andere Energieform**

(57)    Die Erfindung betrifft einen Wellenenergiekonverter (1) zur Umwandlung von Energie aus einer Wellenbewegung eines Fluids in eine andere Energieform, mit einem Gehäuse, an dem wenigstens ein Rotor mit im Wesentlichen horizontaler Drehachse drehbar gehaltert ist, wenigstens einem mit dem wenigstens einen Rotor gekoppelten Energiewandler, wenigstens zwei in einer Richtung (x) senkrecht zur Drehachse voneinander beabstandeten Auftriebskörpern (10,11) an dem Gehäuse und mit einer Steuereinrichtung, die dazu eingerichtet ist, durch entsprechende Ansteuerung der wenigstens zwei Auftriebskörper (10,11) ein auf das Gehäuse (7) wirkendes Drehmoment ($M_z$) zu erzeugen.

**Fig. 3**

EP 2 589 794 A2

**Beschreibung**

Die vorliegende Erfindung betrifft einen Wellenenergiekonverter zur Umwandlung von Energie aus einer Wellenbewegung eines Fluids in eine andere Energieform sowie ein Verfahren zur Ausrichtung eines solchen.

Stand der Technik

Zur Umwandlung von Energie aus Wellenbewegungen in Gewässern in nutzbare Energie sind aus dem Stand der Technik unterschiedliche Vorrichtungen bekannt, die auf hoher See oder in Küstennähe eingesetzt werden können. Eine Übersicht über Wellenenergiekraftwerke gibt beispielsweise G. Boyle, "Renewable Energy", 2. Aufl., Oxford University Press, Oxford 2004.

Unterschiede ergeben sich unter anderem in der Art, auf die die Energie der Wellenbewegung entnommen wird. So sind auf der Wasseroberfläche schwimmende Bojen bzw. Schwimmkörper bekannt, durch deren Heben und Senken beispielsweise ein Lineargenerator angetrieben wird. Bei einem anderen Maschinenkonzept, dem sogenannten "Wave Roller", wird am Meeresboden ein flächiges Widerstandselement angebracht, das durch die Wellenbewegung hin und her gekippt wird. Die Bewegungsenergie des Widerstandselements wird in einem Generator beispielsweise in elektrische Energie umgewandelt. In derartigen oszillierenden Systemen kann allerdings nur ein maximaler Dämpfungs- bzw. Lastfaktor von 0,5 erreicht werden, so dass ihre Wirtschaftlichkeit in der Regel nicht zufriedenstellend ist.

Im Rahmen der vorliegenden Erfindung sind insbesondere Wellenenergiekonverter von Interesse, die im Wesentlichen unter der Wasseroberfläche angeordnet sind und bei denen eine Kurbel- bzw. Rotorwelle durch die Wellenbewegung in Rotation versetzt wird.

Aus der Veröffentlichung von Pinkster et al., "A rotating wing for the generation of energy from waves", 22. International Workshop on Water Waves and Floating Bodies (IWWWFB), Plitvice, 2007, ist in diesem Zusammenhang ein Anlagenkonzept bekannt, bei dem der Auftrieb eines angeströmten Auftriebsläufers, also eines einen hydrodynamischen Auftrieb erzeugenden Kopplungskörpers, in eine Rotationsbewegung umgesetzt wird.

Ferner offenbart die US 2010/0150716 A1 ein System aus mehreren schnelllaufenden Rotoren mit Auftriebsläufern, bei dem die Rotorperiode kleiner als die Wellenperiode ist und eine separate Profilverstellung vorgenommen wird. Durch eine geeignete, jedoch nicht näher offenbarte Verstellung der Auftriebsläufer sollen resultierende Kräfte auf das System erzeugt werden, die für unterschiedliche Zwecke einsetzbar sind. Nachteilig an dem in der US 2010/0150716 A1 offenbarten System ist der Einsatz von schnelllaufenden Rotoren vom Voith-Schneider-Typ, die einen hohen Aufwand bei der Verstellung der Auftriebsläufer erfordern. Diese müssen kontinuierlich in einem nicht unbeträchtlichen Winkelbereich verstellt werden, um den jeweils an dem Auftriebsläufer vorherrschenden Anströmbedingungen angepasst zu werden. Zum Ausgleich der auf die Einzelrotoren wirkenden, aus Rotor- und Generatormoment resultierenden Kräfte sind zudem stets mehrere Rotoren in definierten Abständen zueinander erforderlich. Eine Abstützung des Generatordrehmoments wird nicht behandelt.

Bei gattungsgemäßen Wellenenergiekonvertern wird ein Drehmoment aus einer Wellenorbitalströmung aufgenommen und zur Energieerzeugung, bspw. mittels eines elektrischen Generators, eingesetzt. Durch die Energiewandlung und durch der Orbitalströmung ggf. überlagerte andere Fluidströmungen wirkt auch auf das Gehäuse des Wellenenergiekonverters ein Drehmoment, so dass dieses ohne entsprechende Abstützung sich zu drehen beginnt. In der nicht vorveröffentlichten DE 10 2011 105 169 wird als Stabilisierung ein Rahmen mit Dämpfungsplatten beschrieben. Einer Verkippung des Rahmens wirkt eine Kombination aus Mooring und mindestens einem Auftriebskörper entgegen. Eine ähnliche Drehmomentkompensation wird in der DE 10 2010 054 795 A1 beschrieben.

Es ist wünschenswert, eine einfache Möglichkeit zur gezielten Ausrichtung eines Wellenenergiekonverters anzugeben.

Offenbarung der Erfindung

Erfindungsgemäß werden ein Wellenenergiekonverter sowie ein Verfahren zum Ausrichten eines solchen mit den Merkmalen der unabhängigen Patentansprüche vorgeschlagen. Vorteilhafte Ausgestaltungen sind Gegenstand der Unteransprüche sowie der nachfolgenden Beschreibung.

Vorteile der Erfindung

Als Bezugspunkt für den Rotor ist ein Gehäuse vorgesehen, an dem dieser drehbar gehaltert ist. Bei gattungsgemäßen Wellenenergiekonvertern ist es notwendig, das Gehäuse gegen das wirkende Drehmoment abzustützen, um eine unerwünschte Rotation und/oder Ausrichtung des Gehäuses zu verhindern. Im Rahmen der Erfindung werden dafür an dem Gehäuse wenigstens zwei Auftriebskörper angebracht, die in einer Projektion auf eine Richtung senkrecht zur Rotationsachse voneinander beabstandet sind. Weiterhin sind sie von der Rotationsachse selbst beabstandet, so dass ein passendes Gegendrehmoment erzeugt werden kann, um eine unerwünschte Rotation und/oder Ausrichtung des Gehäuses zu verhindern. Dazu ist das wirksame Auftriebsvolumen in wenigstens einem der wenigstens zwei Auftriebskörper veränderbar. Ein zweckmäßigerweise zur Verankerung der Maschine vorgesehenes Mooringsystem wird nicht oder nur in geringerem Umfang für die Drehmomentabstützung benötigt. Die Erfindung bedient sich einer Steuereinrichtung (offener oder geschlossener Regelkreis), um das Gegendrehmoment einzustellen.

In bevorzugter Ausgestaltung ist die Steuereinrichtung weiter dazu eingerichtet, zusätzlich zu einer Verkippung auch die Tauchtiefe zu steuern. Eine bevorzugte Ausgestaltung, bei der das wirksame Auftriebsvolumen in den wenigstens zwei Auftriebskörpern veränderbar ist, ermöglicht nämlich in besonders vorteilhafter Weise, auch eine erwünschte hydrostatische Auftriebskraft zu erzeugen, um so die Tauchtiefe des Wellenenergiekonverters einstellen zu können. Durch kleine Änderungen des Auftriebs kann die Tauchtiefe leicht reguliert werden, beispielsweise um die Maschine durch Verlagerung in größere Wassertiefen vor zu großen Wellenzuständen mit zu hohen Energiegehalten zu schützen oder um sie für Wartungsfälle an die Oberfläche zu befördern.

Die Verkippung lässt sich im Prinzip durch die Differenz von wirksamen Auftriebsvolumina steuern, die Tauchtiefe durch die Summe der wirksamen Auftriebsvolumina.

Kern der Erfindung ist die Verwendung mehrerer Auftriebskörper, die durch eine aktiv (z.B. mittels einer Pumpe) veränderbare Befüllung mit Fluid (z.B. Luft oder Wasser) ein variables Moment auf die Anlage ausüben. Dadurch kann bspw. ein Verkippungswinkel der Anlage für beliebige Anlagendrehmomente auf einem erwünschten festen Wert gehalten werden, vorzugsweise auf null. Weiterer Vorteil ist, dass die Tauchtiefe der Anlage mittels der Befüllung der Auftriebskörper verändert werden kann.

Die verwendeten Auftriebskörper können feste Wände aufweisen und konstante Hohlräume zur Verfügung stellen, in die jeweils mehr oder weniger Auftriebsfluid (vorzugsweise Luft) eingebracht wird. Solche Auftriebskörper können beispielsweise in Form von Tanks, Tonnen, Kanistern usw. bereitgestellt werden. Sie können auch als zum Meer hin offen realisiert werden.

Die verwendeten Auftriebskörper können auch flexibel sein und veränderliche Hohlräume zur Verfügung stellen, in die jeweils mehr oder weniger Auftriebsfluid (vorzugsweise Luft) eingebracht wird. Solche Auftriebskörper können beispielsweise in Form von Ballons, Hebekissen usw. bereitgestellt werden.

Es ist zweckmäßig, das Auftriebsfluid soweit möglich wiederzuverwenden, bspw. zwischen den Auftriebskörpern untereinander und/oder einer Speichereinheit hin und her zu befördern (insbesondere mittels einer Pumpe). Alternativ kann Luft auch ins Meer abgelassen werden.

Vorzugsweise weist der Wellenenergiekonverter einen Generator zur Energiewandlung auf. Dabei kann es sich insbesondere um einen direktgetriebenen Generator handeln, da hierbei Triebstrangverluste minimiert werden. Alternativ ist jedoch auch die Zwischenschaltung eines Getriebes möglich. Auch die Erzeugung eines Drucks in einem geeigneten Medium mit Hilfe einer Pumpe ist möglich. Dieser Druck stellt bereits eine nutzbare Energieform dar, er kann jedoch z.B. mit Hilfe eines Hydromotors (erneut) in ein Drehmoment gewandelt und in einen Generator gespeist werden.

Auch ein Rotor mit einer bezüglich seiner Rotationsebene zweiseitigen Rotorbasis, wobei an jeder Seite der Rotorbasis wenigstens ein Kopplungskörper angebracht ist, kann vorteilhafterweise zum Einsatz kommen. Hierdurch können insbesondere die auf einen mit dem Rotor gekoppelten Generator einwirkenden, in nutzbare Energie umsetzbaren Kräfte vergrößert werden und es kann durch eine gezielte Beeinflussung von Effektivmomenten auf beiden Seiten der zweiseitigen Rotorbasis, wie insbesondere in der DE 10 2011 105 178 beschrieben, die Lage eines entsprechenden Wellenenergiekonverters gezielt gesteuert werden. Sind die auf beiden Seiten der zweiseitigen Rotorbasis wirkenden Kräfte unterschiedlich, kann ein senkrecht zur Rotationsachse des zweiseitigen Rotors wirkendes Drehmoment auf den Rotor erzeugt und damit eine Drehung des Wellenenergiekonverters ein senkrecht zur Rotationsachse des Rotors bewirkt werden. Damit ist eine besonders präzise Ausrichtung, z.B. zu einer Wellenausbreitungsrichtung, möglich. Nicht alle Kopplungskörper müssen hierbei notwendigerweise verstellbar ausgebildet sein, eine Verstellbarkeit nur eines Teils der Kopplungskörper reicht aus.

Besonders bevorzugt werden am Rotor Kopplungskörper aus der Klasse der Auftriebsläufer verwendet, die bei einer Anströmung neben einer Widerstandskraft in Richtung der lokalen Anströmung insbesondere eine im Wesentlichen senkrecht zur Anströmung gerichtete Auftriebskraft erzeugen. Dabei kann es sich beispielsweise um Auftriebsläufer mit Profilen gemäß dem NACA-Standard (National Advisory Committee for Aeronautics) handeln, die Erfindung ist jedoch nicht auf derartige Profile beschränkt. Besonders bevorzugt können Eppler-Profile zum Einsatz kommen. Bei einem entsprechenden Rotor ergibt sich die lokale Anströmung und der damit verknüpfte Anströmwinkel aus einer Überlagerung der Orbitalströmung in der lokalen bzw. momentanen Wellenanströmrichtung, der Tangentialgeschwindigkeit des Auftriebsläufers am Rotor und dem Anstellwinkel des Auftriebsläufers. Damit kann insbesondere durch eine Verstellung des Anstellwinkels des wenigstens einen Auftriebsläufers die Ausrichtung des Auftriebsläufers auf die lokal vorliegenden Anströmungsverhältnisse optimiert werden. Weiterhin sind auch eine Verwendung von Klappen ähnlich wie jene an Flugzeugflügeln und/oder eine Änderung der Auftriebsprofilgeometrie (sogenanntes "Morphing") zur Beeinflussung der Anströmung möglich. Die genannten Änderungen seien von der Formulierung "Formveränderung" umfasst.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung

Figur 1    zeigt einen Wellenenergiekonverter mit einem Rotor mit zwei Auftriebsläufern in einer Seitenansicht und veranschaulicht den Anstellwinkel y und den Phasenwinkel ∆ zwischen Rotor und Orbitalströmung.

Figur 2    zeigt einen verkippten Wellenenergiekonverter mit gleich befüllten Auftriebskörpern.

Figur 3    zeigt einen unverkippten Wellenenergiekonverter mit unterschiedlich befüllten Auftriebskörpern.

Figur 4    zeigt ein bevorzugtes Regelkreisschema für einen Wellenenergiekonverter zur Regelung von Verkippung und Auftrieb.

Figur 5    zeigt einen weiteren Wellenenergiekonverter mit einem Rotor zur Wandlung von Energie aus einer Wellenbewegung mit doppelseitiger Kopplungskörperanordnung in perspektivischer Ansicht.

Figur 6    zeigt einen Wellenenergiekonverter mit einem Rotor zur Wandlung von Energie aus einer Wellenbewegung mit doppelseitiger Kopplungskörperanordnung an einer Haltestruktur in perspektivischer Ansicht.

Figur 7    zeigt mehrere Wellenenergiekonverter mit Rotoren zur Wandlung von Energie aus einer Wellenbewegung an einer Haltestruktur in perspektivischer Ansicht.

Figur 8    zeigt mehrere Wellenenergiekonverter mit Rotoren zur Wandlung von Energie aus einer Wellenbewegung an einer Haltestruktur mit doppelseitiger Kopplungskörperanordnung in perspektivischer Ansicht.

Figur 9    zeigt mehrere Wellenenergiekonverter mit Rotoren zur Wandlung von Energie aus einer Wellenbewegung an einer Haltestruktur mit teilweise doppelseitiger Kopplungskörperanordnung in perspektivischer Ansicht.

Detaillierte Beschreibung der Zeichnungen

In den Figuren sind gleiche oder gleich wirkende Elemente mit identischen Bezugszeichen angegeben. Auf eine wiederholte Erläuterung wird der Übersichtlichkeit halber verzichtet.

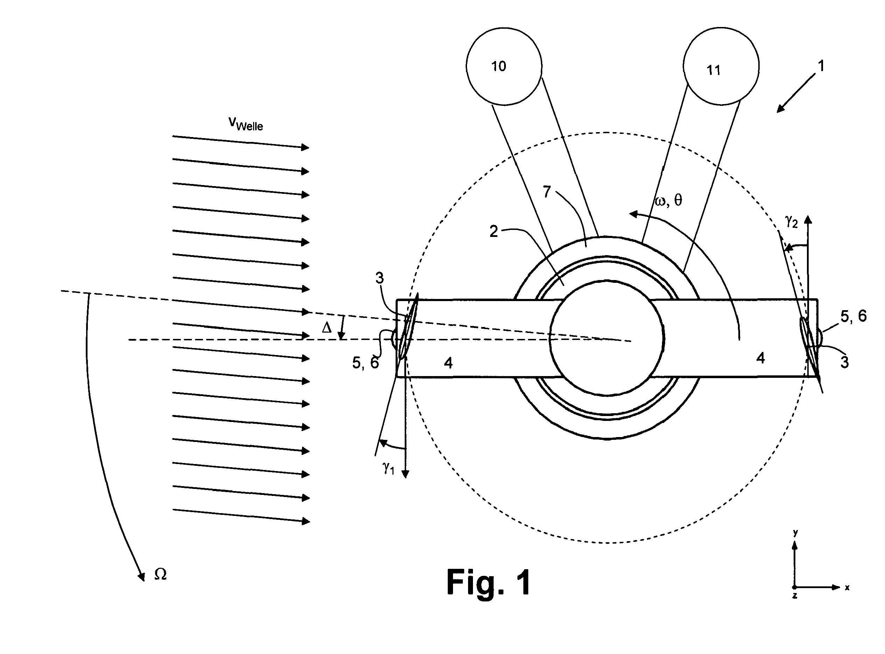

In Figur 1 ist ein Wellenenergiekonverter 1 mit einem Gehäuse 7 und einem Rotor 2,3,4 mit einer Rotorbasis 2 und zwei jeweils über Hebelarme 4 an der Rotorbasis 2 befestigten Kopplungskörpern 3 dargestellt. An dem Gehäuse 7 sind zwei Auftriebskörper 10, 11 angebracht, die voneinander in einer Richtung x senkrecht zur (hier in Richtung z verlaufenden) Rotationsachse des Rotors beabstandet sind.

Der Rotor 2,3,4 sei unterhalb der Wasseroberfläche eines welligen Gewässers - beispielsweise eines Ozeans - angeordnet. Seine Rotationsachse sei weitgehend horizontal und weitgehend senkrecht zur aktuellen Ausbreitungsrichtung der Wellen des welligen Gewässers orientiert. Die Kopplungskörper 3 sind im gezeigten Beispiel als Auftriebsprofile ausgeführt. Hierbei sollen vorzugsweise Tiefwasserbedingungen vorliegen, bei denen die Orbitalbahnen der Wassermoleküle, wie erläutert, weitgehend kreisförmig verlaufen. Vorzugsweise sind die rotierenden Komponenten des Wellenenergiekonverters dabei mit einem weitgehend neutralen Auftrieb versehen, um eine Vorzugsposition zu vermeiden.

Die Kopplungskörper 3 sind als Auftriebsläufer ausgebildet und in einem Winkel von 180° zueinander angeordnet. Vorzugsweise sind die Auftriebsläufer in der Nähe ihres Druckpunktes gehalten, um im Betrieb auftretende Rotationsmomente auf die Auftriebsläufer und damit die Anforderungen an die Halterung und/oder die Verstelleinrichtungen zu reduzieren.

Der radiale Abstand zwischen Aufhängungspunkt eines Kopplungskörpers und Rotorachse beträgt 1 m bis 50 m, vorzugsweise 2 m bis 40m, besonders bevorzugt 4 m bis 30 m und ganz besonders bevorzugt 5 m bis 20 m.

Zusätzlich dargestellt sind zwei Verstelleinrichtungen 5 zur Verstellung von Anstellwinkein $Y_1$ und $Y_2$ der Kopp-

lungskörper 3 zwischen Flügelsehne und Tangente an die Bewegungsbahn. Die beiden Anstellwinkel $Y_1$ und $Y_2$ sind vorzugsweise entgegen gerichtet orientiert und weisen vorzugsweise Werte von -20° bis 20° auf. Insbesondere beim Anfahren der Maschine können jedoch auch größere Anstellwinkel vorgesehen sein. Vorzugweise können die Anstellwinkel $Y_1$ und $Y_2$ unabhängig voneinander verstellt werden. Bei den Verstelleinrichtungen kann es sich beispielsweise um elektromotorische Verstelleinrichtungen - vorzugsweise mit Schrittmotoren - und/oder um hydraulische und/oder pneumatische Komponenten handeln. Die beiden Verstelleinrichtungen 5 können zudem jeweils eine Sensorik 6 zur Bestimmung der aktuellen Anstellwinkel $Y_1$ und $Y_2$ aufweisen.

Der Wellenenergiekonverter 1 wird von der Orbitalströmung mit einer Anströmungsgeschwindigkeit $v_{Welle}$ angeströmt. Dabei handelt es sich bei der Anströmung um die Orbitalströmung von Meereswellen, deren Richtung sich kontinuierlich ändert. Im dargestellten Fall ist die Drehung der Orbitalströmung entgegen dem Uhrzeigersinn orientiert, die dazugehörige Welle breitet sich also von rechts nach links aus.

Hinsichtlich weiterer Details zur Funktionsweise eines solchen Wellenenergiekonverters sei auf die einleitend genannte DE 10 2011 105 169 verwiesen, deren Offenbarung auch zum Inhalt dieser Anmeldung gemacht wird.

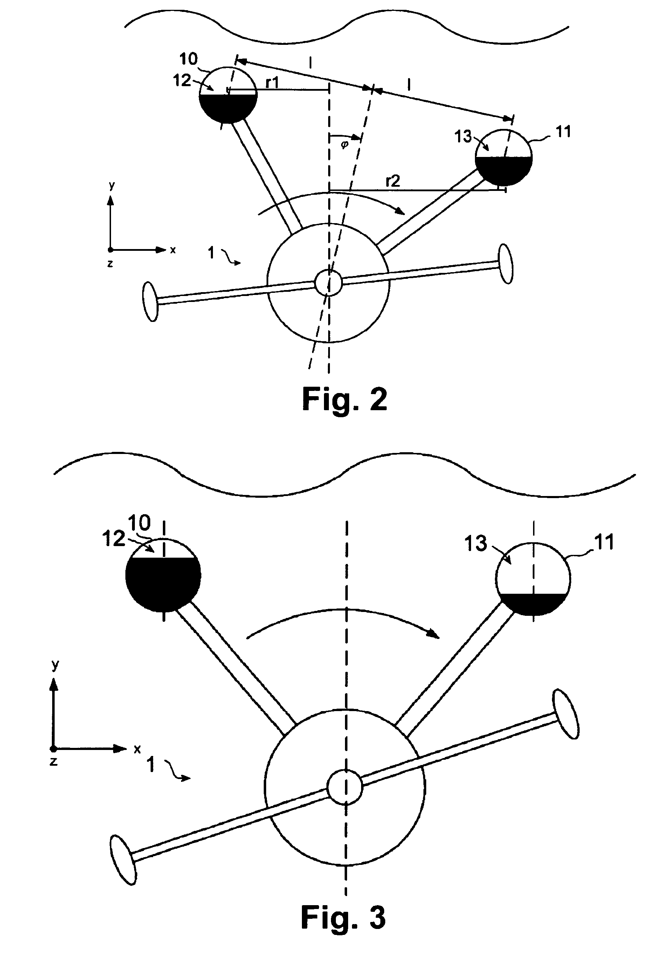

In Figur 2 ist schematisch ein Wellenenergiekonverter (insbesondere aus Figur 1) in einer Betriebssituation dargestellt, wobei sich in dem Gewässer die Wellen in x-Richtung von links nach rechts ausbreiten.

Der Abstand der Auftriebskörper 10 und 11 von der Mittelachse ist für beide derselbe und mit 1 bezeichnet. In den gezeigten Auftriebskörpern 10, 11 befindet sich dasselbe wirksame Auftriebsvolumen 12 bzw. 13, bspw. ein Luftvolumen. Durch das Abgreifen der durch die Orbitalströmung an den Kopplungskörpern erzeugten Kräfte mit Hilfe des Generators wirkt auf das Gehäuse 7 ein Lastmoment $M_{last}$, das zu einer gezeigten Verkippung führt. Ein Gleichgewichtszustand wird erreicht, wenn dieses Lastmoment durch das von den mitverkippten Auftriebskörpern 10, 11 erzeugte Gegendrehmoment (aufgrund der unterschiedlichen Abstände r1 bzw. r2 der Auftriebskörper vom Lot durch die Rotationsachse) kompensiert wird. Dadurch stellt sich ein Verkippungswinkel $\varphi$ ein.

In Figur 3 ist gezeigt, wie der Wellenenergiekonverter im Rahmen der Erfindung so ausgerichtet werden kann, dass der Verkippungswinkel $\varphi$ = 0 wird. Dazu werden die wirksamen Auftriebsvolumina 12, 13 in den Auftriebskörpern 10 bzw. 11 so verändert, dass sich ein ausreichendes Gegendrehmoment bereits für $\varphi$ = 0 ergibt. Eine Steuereinrichtung innerhalb des Wellenenergiekonverters 1 füllt oder leert dazu die Auftriebskörper 10 und 11 abhängig vom gemessenen aktuellen Verkippungswinkel. Der Verkippungswinkel kann durch einen Sensor (bspw. durch ein Lot) im Gehäuse 7 gemessen werden. Im gezeigten Beispiel wird dazu solange Flüssigkeit vom Auftriebskörper 11 in den Auftriebskörper 10 (bzw. Luft vom Auftriebskörper 10 in den Auftriebskörper 11) gepumpt, bis sich ein Verkippungswinkel $\varphi$ = 0 ergibt. Die Auftriebskraft insgesamt ändert sich dabei nicht.

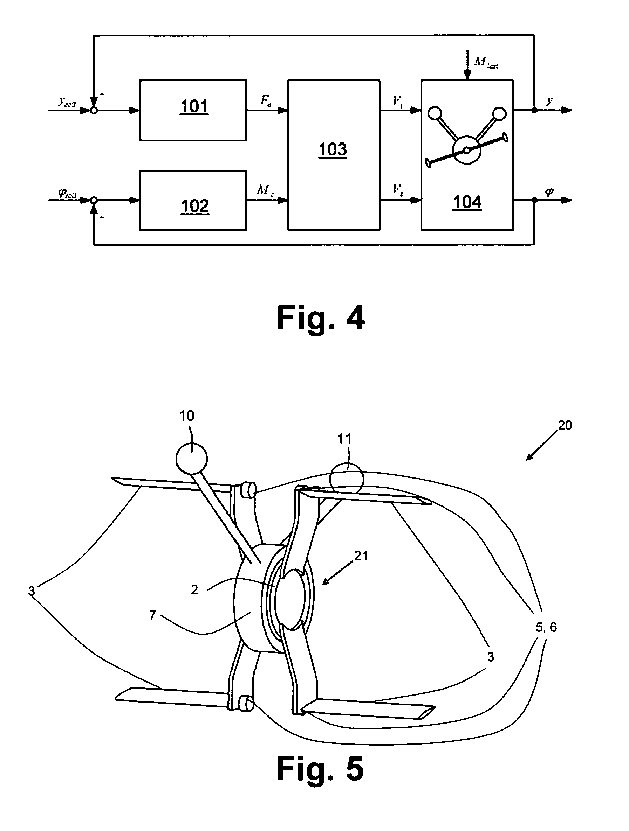

Die Struktur einer Steuereinrichtung im geschlossenen Regelkreis für einen Wellenenergiekonverter 1 ist in Figur 4 dargestellt. Die Struktur ist exemplarisch hergeleitet für die Ausführungsform gemäß den Figuren 1 bis 3 mit zwei Auftriebskörpern, beispielsweise Stahltanks. Je einer Vergleichsstelle werden der Istwert der Tauchtiefe y und der des Verkippungswinkels $\varphi$ zugeführt, wo sie mit je einem Sollwert $y_{soll}$ bzw. $\varphi_{soll}$ verglichen werden. Die sich jeweils ergebende Regelabweichung wird einem zugehörigen Regelglied 101 bzw. 102 zugeführt. Das Regelglied 101 für die Tauchtiefe y gibt als Steuergröße eine Auftriebskraft $F_a$ aus, das Regelglied 102 für den Verkippungswinkel $\varphi$ ein Gegendrehmoment $M_z$. Beide SollWerte werden einem Transformationsglied 103 zugeführt, welches die Sollwerte für die wirksamen Auftriebsvolumina $V_1$ und $V_2$ bestimmt. Diese werden als Stellgrößen der Regelstrecke 104 zugeführt.

Für die Steuergrößen gilt für kleine Verkippungswinkel $\varphi$ näherungsweise:

$$F_a = \rho g (V_1 + V_2),$$

$$M_z = l \rho g (V_2 - V_1),$$

mit

$\rho$:     Dichte des umgebenden Fluids (Meerwasser)
$V_1, V_2$:     wirksames Auftriebsvolumen (Luft)
g:     Erdbeschleunigung
l:     Abstand zwischen Auftriebskörpern und Mittelachse

Aus diesen Gleichungen lässt sich leicht die Stellgrößentransformation

$$V_1 = \frac{lF_a - M_z}{2l\rho g}, \quad V_2 = \frac{lF_a + M_z}{2l\rho g}$$

berechnen, um die zu einer bestimmten Auftriebskraft und einem bestimmten Moment gehörenden wirksamen Auftriebsvolumina (hier Luftfüllungen der Auftriebskörper) zu bestimmen.

Für große Verkippungswinkel φ gilt:

$$M_z = \rho{*}g{*}(r2{*}V_2 - r1{*}V_1)$$

mit entsprechender Anpassung der Stellgrößentransformation.

Das erfindungsgemäße Prinzip der Ausrichtung lässt sich besonders vorteilhaft mit unterschiedlichen Ausgestaltungen eines Wellenenergiekonverters verknüpfen, wie nachfolgend erläutert.

In Figur 5 ist eine weitere Ausführungsform eines Wellenenergiekonverters 20 mit beidseitigem Rotor dargestellt. Dieser zeichnet sich dadurch aus, dass an der Rotorbasis 2 beidseitig Kopplungskörper 3 angeordnet sind. Auf diesen Wellenenergiekonverter mit beidseitigem Rotor können die zuvor in den Erläuterungen zu den Figuren 1 bis 4 genannten Eigenschaften und Ausprägungen einzeln oder in Kombination angewandt und übertragen werden. Ein solcher Wellenenergiekonverter lässt sich mit den Auftriebskörpern 10, 11 besonders leicht ausrichten. Dabei können durch eine Hinzunahme von weiteren Auftriebskörpern auch Verkippungen in seitlicher Richtung beeinflusst werden.

Ist die Wellenausbreitungsrichtung einer monochromatischen Welle senkrecht zur Rotationsachse des Rotors gerichtet, so führt dies dazu, dass die jeweils paarweise nebeneinander angeordneten Kopplungskörper im Idealfall absolut identische Anströmungsbedingungen erfahren. Für diesen Fall können die Anstellwinkel Y dieser nebeneinander angeordneten Kopplungskörper vorzugsweise identisch eingestellt. Ergibt sich im realen Betriebsfall eine abweichende Anströmung der beiden Rotorhälften, so kann der Anstellwinkel jedes Kopplungskörpers 3 individuell so eingestellt werden, dass sich die lokale Anströmung optimal ausprägt.

Die Beidseitigkeit erlaubt darüber hinaus eine Drehung um die y-Achse.

Unabhängig von der Beidseitigkeit handelt es sich um eine bevorzugte Ausführung, bei der der Energiewandler als direktgetriebenen Generator 21 realisiert ist, der als integraler Bestandteil des Wellenenergiekonverters 20 mit seinem Ständer das Gehäuse 7 des Wellenenergiekonverters bildet und bei dem die Kopplungskörper 3 über Hebelarme direkt an den als Rotorbasis 2 wirkenden Läufer 2 des Generators 21 gekoppelt sind. Damit bildet der Wellenenergiekonverter 10 dieser Ausprägung eine besonders kompakte Bauform, bei der durch Verzicht auf eine Welle Strukturkosten minimiert werden.

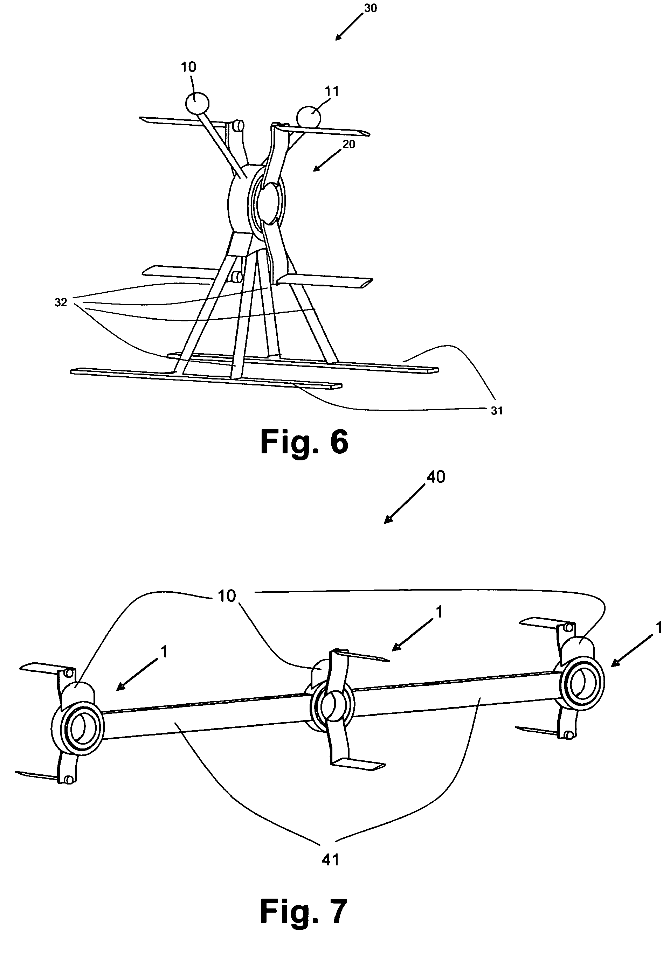

In Figur 6 ist ein Wellenenergiekonverter 30 dargestellt, der neben einem Wellenenergiekonverter 20 gemäß Figur 5 weitere Elemente enthält. Dabei handelt es sich im Einzelnen um Dämpfungsplatten 31, die über einen Rahmen 32 weitgehend starr mit dem Gehäuse 7 bzw. einem Ständer eines direktgetriebenen Generators verbunden sind. Die Dämpfungsplatten 31 befinden sich in größeren Wassertiefen als der Rotor. In diesen größeren Wassertiefen ist die durch die Wellenbewegung verursachte Orbitalbewegung der Wassermoleküle deutlich reduziert, so dass die Dämpfungsplatten 31 zu einer Abstützung bzw. Stabilisierung des Wellenenergiekonverters 30 führen.

Eine derartige Stabilisierung ist vorteilhaft, um die Rotationsachse in erster Näherung stationär zu halten. Ohne eine derartige Stabilisierung würden die Rotorkräfte dazu führen, dass die Rotationsachse im Extremfall unter einem Phasenversatz mit der Orbitalströmung orbitieren würde, wodurch sich die Anströmverhältnisse der Kopplungskörper 3 fundamental verändern würden. Die Funktionalität des Wellenenergiekonverters würde hierdurch negativ beeinflusst. Es sei jedoch zu verstehen gegeben, dass ein Wellenenergiekonverter auch durch andere Mittel, die keine Dämpfungsplatten umfassen müssen, entsprechend stabilisiert werden kann.

Beispielhaft sind die beiden Dämpfungsplatten horizontal dargestellt. Es werden jedoch auch Konfigurationen als vorteilhaft angesehen, bei denen die Dämpfungsplatten anders orientiert sind. Beispielsweise könnten beide Platten um 45° zur Horizontalen verkippt angeordnet werden, so dass sie miteinander einen 90°-Winkel einschließen. Andere Konfigurationen sind für den Fachmann herleitbar. Auch können andere Dämpfungsplattengeometrien und/oder -anzahlen eingesetzt werden.

Darüber hinaus kann vorgesehen sein, dass die Dämpfungsplatten 31 in ihrem Winkel und/oder in ihrer Dämpfungswirkung verstellbar sind. Die Beeinflussung der Dämpfungswirkung kann beispielsweise durch eine Änderung der Fluiddurchlässigkeit erreicht werden. Auch durch eine unter Umständen zyklisch veränderte Dämpfung lässt sich das Antwortverhalten des Wellenenergiekonverters 30 auf die eingeleiteten Kräfte beeinflussen.

Alternativ zu einem beidseitigen Rotor können im Übrigen auch einseitige Rotoren zum Einsatz kommen.

In Figur 7 ist ein Wellenenergiekonverter 40 mit drei (Teil-)Wellenenergiekonvertern 1 mit einseitigen (Teil-) Rotoren gemäß Figur 1 dargestellt. Dabei sind die (Teil-) Wellenenergiekonverter mit weitgehend paralleler Rotorachse in einem weitgehend horizontal orientierten Rahmen 41 montiert, so dass die Rotoren unterhalb der Wasseroberfläche angeordnet sind und ihre Rotorachsen weitgehend senkrecht zur einlaufenden Welle orientiert sind. In dem dargestellten Fall entspricht der Abstand vom ersten bis zum letzten Rotor in etwa der Wellenlänge der Meereswelle so dass für den angenommenen Fall einer monochromatischen Welle der vorderste und der hinterste Rotor die gleiche Orientierung aufweisen, während der mittlere Rotor um 180° verdreht ist. Dabei rotieren alle drei Rotoren entgegengesetzt zum Uhrzeigersinn, die Welle läuft also von hinten über die Maschine. Wellenlängen von Meereswellen liegen zwischen 40 m und 360 m, wobei typische Wellen Wellenlängen von 80 m bis 200 m aufweisen.

An dem Rahmen 41 und/oder den Rotoren sind vorteilhafterweise mehrere Auftriebskörper 10 angebracht, mit Hilfe derer die Tauchtiefe reguliert sowie ein Gegenmoment erzeugt werden kann.

Dabei kann der Rahmen 41 so ausgeführt sein, dass der Abstand zwischen den Rotoren einstellbar ist, so dass die Maschinenlänge auf die aktuelle Wellenlänge abgestimmt werden kann. Es werden jedoch auch Maschinen erwogen, die deutlich länger als eine Wellenlänge sind und eine andere Anzahl von Rotoren aufweisen, was zu einer weiteren Verbesserung der Maschinenstabilität durch die Überlagerung der eingeleiteten Kräfte führt.

Zusätzlich können zur weiteren Stabilisierung Dämpfungsplatten vorgesehen sein, die in größerer Wassertiefe angeordnet sein können. Ebenfalls zur weiteren Stabilisierung der Anlage, insbesondere gegenüber einer Rotation um die Längsachse, könnten Auftriebssysteme an mindestens einem Querträger angeordnet sein. Ein solcher, vorzugsweise weitgehend horizontal orientierter Querträger kann beispielsweise am hinteren Ende des Rahmens angeordnet sein.

Weiterhin kann vorgesehen sein, dass der Rahmen 41 des Wellenenergiekonverters als schwimmender Rahmen ausgeführt ist und dass die getaucht unter der Wasseroberfläche angeordneten Rotoren mit weitgehend horizontaler Rotorachse über eine entsprechend ausgeführte Rahmenkonstruktion drehbar an dem schwimmenden Rahmen gehaltert sind. Dabei ergibt sich an einem derartigen schwimmenden Rahmen je nach Ausprägung bereits eine Art Drehmomentausgleich, da durch ein aufgeprägtes Drehmoment und eine dadurch verursachte Verkippung eine Verschiebung der Tauchvolumina erfolgt.

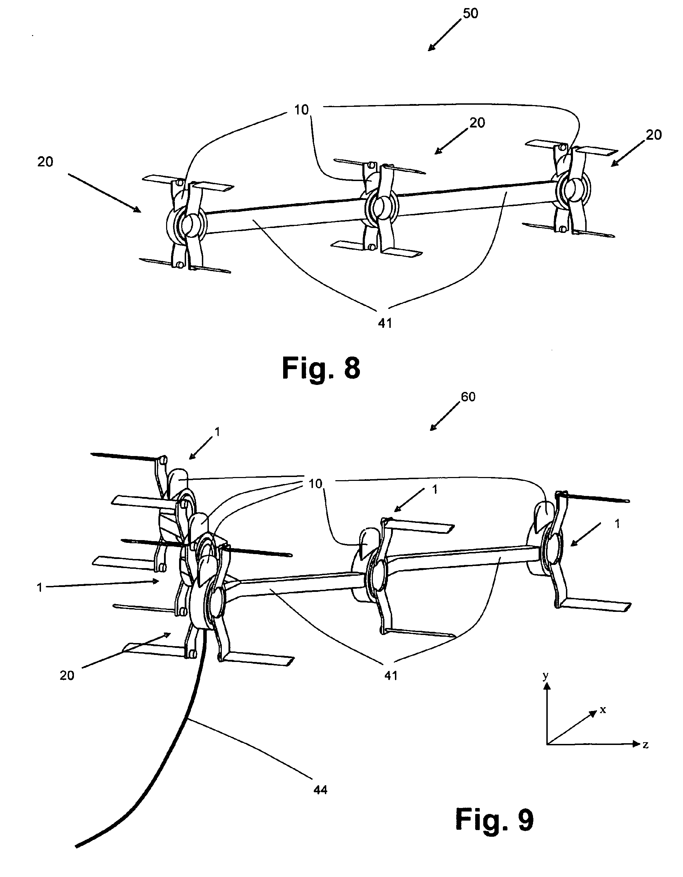

Figur 8 zeigt eine alternative Ausführung eines vorteilhaften Wellenenergiekonverters 50 mit weitgehend horizontaler Rahmenerstreckung und einer Mehrzahl von beidseitigen Rotoren. Im Vergleich zu einer Anordnung 40 mit einseitigen Rotoren ist dies ist eine besonders vorteilhafte Ausführungsform, da dadurch die Anzahl die Momenteinleitung je Generator erhöht wird.

Figur 9 zeigt eine weitere alternative Ausführung eines vorteilhaften Wellenenergiekonverters 60 mit einer Kombination aus einem beidseitigen Rotor und einer Mehrzahl einseitiger Rotoren und einer weitgehend horizontalen Rahmenerstreckung. Dabei ist der Rahmen 61 als V ausgeführt, um eine Abschattung zwischen den verschiedenen Rotoren zu vermeiden und/oder zu minimieren. Alternativ können hier jeweils auch beidseitige Rotoren vorgesehen sein.

Ebenfalls dargestellt ist eine Verankerung 44 (Mooring), die vorzugsweise an der Spitze der V-förmigen Anordnung angreift, so dass sich der Wellenenergiekonverter 30 durch Wetterfahneneffekte vorzugsweise weitgehend selbstständig so zur Welle ausrichtet, so dass er von dieser von vorne angeströmt wird. Dadurch erfolgt bereits eine weitgehend senkrechte Anströmung der Rotorachsen, die beispielsweise durch die Beeinflussung der Rotorkräfte noch weiter optimiert werden kann. Ähnliche Verankerungssysteme können auch für die in den anderen Figuren gezeigten Systeme vorgesehen sein, um insbesondere eine Ortstreue der Anlagen zu gewährleisten.

Die vorhandenen Auftriebssysteme 10 können bereits ein Gegendrehmoment erzeugen, es ist aber auch eine Einbeziehung der Verankerungskräfte des Mooringsystems 44 möglich. Zur Versteifung des Rahmens können zusätzlich Abspannungen und/oder Verstrebungen vorgesehen sein. Zudem kann auch eine Stabilisierung durch den Einsatz von Dämpfungsplatten ähnlich wie in Figur 6 vorgesehen sein. Durch unterschiedliche Befüllung von in z-Richtung beabstandeter Auftriebskörper 10 kann ein auf den Rahmen 41 in x-Richtung wirkendes Drehmoment erzeugt werden. Dasselbe gilt für den Fall eines einzelnen Wellenenergiekonverters mit in z-Richtung beabstandeten Auftriebskörpern, die dann ein Drehmoment in x-Richtung auf das Gehäuse erzeugen würden.

## Patentansprüche

1. Wellenenergiekonverter (1, 20, 30, 40, 50, 60) zur Umwandlung von Energie aus einer Wellenbewegung eines Fluids in eine andere Energieform,
mit einem Gehäuse (7), an dem wenigstens ein Rotor (2,3,4) mit im Wesentlichen horizontaler Drehachse drehbar gehaltert ist, wenigstens einem mit dem wenigstens einen Rotor gekoppelten Energiewandler (8), wenigstens zwei in einer Richtung (x) senkrecht zur Drehachse voneinander beabstandeten Auftriebskörpern (10,11) an dem Gehäuse (7) und mit einer Steuereinrichtung, die dazu eingerichtet ist, durch entsprechende Ansteuerung der wenigstens zwei Auftriebskörper (10,11) ein auf das Gehäuse (7) wirkendes Drehmoment ($M_z$) zu erzeugen.

**2.** Wellenenergiekonverter nach Anspruch 1, wobei die Steuereinrichtung dazu eingerichtet ist, durch entsprechende Ansteuerung der wenigstens zwei Auftriebskörper (10,11) eine auf das Gehäuse (2) wirkende Auftriebskraft ($F_a$) zu erzeugen.

**3.** Wellenenergiekonverter nach Anspruch 1 oder 2, wobei die Ansteuerung eine Einstellung eines wirksamen Auftriebsvolumens (12,13; $V_1$, $V_2$) wenigstens eines der wenigstens zwei Auftriebskörper (10,11) umfasst.

**4.** Wellenenergiekonverter nach Anspruch 3, der eine Pumpe aufweist, um Fluid zwischen den Auftriebskörpern (10,11) auszutauschen.

**5.** Wellenenergiekonverter nach einem der vorstehenden Ansprüche, wobei wenigstens einer der wenigstens zwei Auftriebskörper (10,11) starr ist und ein konstantes Volumen hat.

**6.** Wellenenergiekonverter nach einem der vorstehenden Ansprüche, wobei wenigstens einer der wenigstens zwei Auftriebskörper (10,11) elastisch ist und ein variables Volumen hat.

**7.** Wellenenergiekonverter nach einem der vorstehenden Ansprüche, wobei an dem Gehäuse (7, 41) wenigstens drei Auftriebskörper (10,11) angebracht sind, von denen wenigstens zwei in eine Richtung (x) senkrecht zur Rotationsachse und wenigstens zwei in eine Richtung (z) parallel zur Rotationsachse beabstandet sind, wobei die Steuereinrichtung dazu eingerichtet ist, durch entsprechende Ansteuerung der wenigstens zwei in die Richtung (z) parallel zur Rotationsachse beabstandeten Auftriebskörper (10) ein auf das Gehäuse (7, 41) wirkendes zweites Drehmoment zu erzeugen.

**8.** Wellenenergiekonverter nach einem der vorstehenden Ansprüche, wobei der wenigstens eine Rotor wenigstens einen Kopplungskörper (3) aufweist, um aus der Wellenbewegung durch Erzeugen einer hydrodynamischen Auftriebskraft ein Drehmoment auf den Rotor zu erzeugen.

**9.** Wellenenergiekonverter nach Anspruch 8, wobei die Steuereinrichtung dazu eingerichtet ist, Betrag und/oder Richtung der hydrodynamischen Auftriebskraft durch Verändern einer Stellung und/oder einer Form des wenigstens einen Kopplungskörpers (3) einzustellen.

**10.** Wellenenergiekonverter nach Anspruch 8 oder 9, wobei der wenigstens eine Kopplungskörper (3) an wenigstens einer Rotorbasis (2) von der Rotationsachse des wenigstens einen Rotors beabstandet angebracht ist.

**11.** Wellenenergiekonverter nach einem der vorstehenden Ansprüche, wobei der wenigstens eine Rotor (2,3,4) eine bezüglich seiner Rotationsebene zweiseitige Rotorbasis (2) und jeweils wenigstens einen Kopplungskörper (3) auf jeder Seite der Rotorbasis (2) aufweist.

**12.** Wellenenergiekonverter nach Anspruch 11, wobei Mittel (5) zur unabhängigen oder gemeinsamen Verstellung der Kopplungskörper (3) vorgesehen sind.

**13.** Wellenenergiekonverter nach einem der vorstehenden Ansprüche, wobei der wenigstens eine Energiewandler (8) als direktgetriebener Generator (21) ausgebildet ist, wobei der wenigstens eine Rotor der Antrieb des Generators ist.

**14.** Wellenenergiekonverter nach Anspruch 13, wobei der Läufer des direktgetriebenen Generators (21) die Rotorbasis (2) des wenigstens einen Rotors bildet.

**15.** Wellenenergiekonverter nach einem der vorstehenden Ansprüche, der wenigstens einen Stabilisierungsrahmen (32) und/oder Dämpfungsplatten (31) zur Stabilisierung des Wellenenergiekonverters und/oder Verankerungsmittel (24) zur Verankerung des Wellenenergiekonverters aufweist.

**16.** Wellenenergiekonverter nach einem der vorstehenden Ansprüche, der mehrere an einer länglichen, insbesondere V-förmigen, Struktur (31, 41) angebrachte ein- und/oder zweiseitige Rotoren aufweist.

**17.** Verfahren zum Ausrichten eines Wellenenergiekonverter nach einem der vorstehenden Ansprüche, wobei ein auf das Gehäuse (7) wirkendes Drehmoment erzeugt wird, indem die Auftriebskörper (10,11) zur Erzeugung unterschiedlicher hydrostatischer Auftriebskräfte angesteuert werden.

18. Verfahren nach Anspruch 17, wobei eine auf das Gehäuse (2) wirkende hydrostatische Auftriebskraft ($F_a$) erzeugt wird, indem die Auftriebskörper (10,11) zur Erzeugung bestimmter hydrostatischer Auftriebskräfte angesteuert werden.

Fig. 1

**Fig. 2**

**Fig. 3**

# Fig. 4

# Fig. 5

**Fig. 6**

**Fig. 7**

50

10

20

20

20

41

# Fig. 8

60

1

10

1

1

1

20

41

44

y

x

z

# Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100150716 A1
- DE 102011105169
- DE 102010054795 A1
- DE 102011105178

**In der Beschreibung aufgeführte Nicht-Patentliteratur**

- **G. BOYLE.** Renewable Energy. Oxford University Press, 2004
- **PINKSTER et al.** A rotating wing for the generation of energy from waves. *22. International Workshop on Water Waves and Floating Bodies (IWWWFB,* 2007